Europäisches Patentamt

European Patent Office

Office européen des brevets

(11) Veröffentlichungsnummer : **0 108 875**
**B1**

(12) **EUROPÄISCHE PATENTSCHRIFT**

(45) Veröffentlichungstag der Patentschrift :
21.01.87

(51) Int. Cl.⁴ : **B 60 K   5/12**

(21) Anmeldenummer : 83108522.0

(22) Anmeldetag : 30.08.83

(54) Träger zur Motor- oder Getriebeaufhängung eines Kraftfahrzeuges.

(30) Priorität : 19.10.82 DE 3238587

(43) Veröffentlichungstag der Anmeldung :
23.05.84 Patentblatt 84/21

(45) Bekanntmachung des Hinweises auf die Patenterteilung : 21.01.87 Patentblatt 87/04

(84) Benannte Vertragsstaaten :
FR GB IT

(56) Entgegenhaltungen :
DE-A- 2 821 677
DE-A- 3 021 676
FR-A- 2 447 274

(73) Patentinhaber : Messerschmitt-Bölkow-Blohm Gesellschaft mit beschränkter Haftung
Robert-Koch-Strasse
D-8012 Ottobrunn (DE)

(72) Erfinder : Schulz, Ralf-Thilo, Dipl.-Ing.
Ödenstockacherstrasse 3
D-8011 Putzbrunn (DE)
Erfinder : Rapp, Helmut, Dipl.-Ing.
Münchnerstrasse 10
D-8011 Brunnthal (DE)

## Beschreibung

Die Erfindung bezieht sich auf einen Träger zur Aufhängung des Motors oder Getriebes an der Karosserie eines Kraftfahrzeuges. Die Träger zur Aufhängung des Motors oder Getriebes eines Kraftfahrzeuges bestehen heutzutage im allgemeinen aus einem starren Metallelement und einem elastomeren Materialblock. Das starre Metallelement ist dabei am Motor bzw. Getriebe befestigt, während der elastomere Materialblock zwischen dem starren Metallelement und einer an der Karosserie befestigten Metallplatte angeordnet ist. Ein derartiger Träger weist jedoch nicht nur ein relativ großes Gewicht auf, vielmehr läßt auch die Geräusch- und Vibrationsdämpfung zu Wünschen übrig.

Um eine unterschiedliche Nachgiebigkeit des elastomeren Materialblocks in unterschiedlichen Richtungen zu erzielen, beispielsweise um eine übermäßige Nickbewegung des Motors zu verhindern, ist es aus der DE-A-30 21 676 bekannt, in den elastomeren Materialblock orientierte Fasern einzubetten.

Die Erfindung, wie sie im Anspruch 1 angegeben ist, löst die Aufgabe, einen Träger zur Aufhängung des Motors oder Getriebes eines Kraftfahrzeuges zur Verfügung zu stellen, der bei geringem Gewicht eine auf das betreffende Kraftfahrzeug optimal abstimmbare Geräusch- und Vibrationsverminderung ermöglicht.

Der erfindungsgemäße Träger besteht also einschließlich der Flansche oder Platten zur Befestigung an dem Motor oder Getriebe aus einem einzigen Bauteil in Faserverbundwerkstoff-Bauweise, das sowohl federt als auch dämpft.

Als Vorteile des erfindungsgemäßen Trägers sind neben dessen geringen Gewicht die integrierte Dämpfung, die hohe Langlebigkeit und die gute Abstimmbarkeit auf die Frequenzanforderungen bei dem betreffenden Kraftfahrzeug zu nennen.

Als Fasern des Faserverbundwerkstoffes werden vorzugsweise Glas/Aramid- oder Kohlefasern mit einer Dicke von 5 bis 15 μ verwendet. Durch den Aufbau des Verbundwerkstoffs aus mehreren Lagen mit bestimmter Faserorientierung gemäß den Ansprüchen 5 bis 9 lassen sich die Eigenfrequenz und die Dämpfungscharakteristika des Trägers steuern.

Aus der DE-A-2 821 677 ist eine rohrförmige Welle aus einem mit orientierten Fasern verstärkten Kunststoff bekannt, welche einerseits am Motor und andererseits am Getriebe eines Kraftfahrzeuges befestigt ist. Aus der FR-A-2 447 274 sind Lagen aus duroplastischen Harzen mit einem bestimmten Anteil an orientierten Fasern bekannt, die zu Faserverbundwerkstoffen hoher mechanischer Festigkeit und Starrheit führen.

Desgleichen läßt sich durch den Einbau elastischer Zwischenschichten zwischen einzelnen Faserverbundwerkstoff-Lagen eine zusätzliche Dämpfungswirkung erzielen.

Die Form oder Geometrie des Trägers hängt von dem betreffenden Kraftfahrzeug, von der Belastung des Trägers, seiner Länge und von dem zwischen Motor und Karosserie verfügbaren Raum ab. Der Träger ist dabei hinsichtlich seiner Form jedenfalls so variabel wie die bekannten aus einem starren Metallelement und einem elastomeren Metallblock bestehenden Träger.

Unter Faserverbundwerkstoffen sind im vorliegenden Zusammenhang Stoffe zu verstehen, die aus Fasern mit hoher gewichtsbezogener Festigkeit und/oder Steifigkeit und einer Reaktionsmatrix nach der DIN-Norm 16 945, die ausgehärtet ist, bestehen. Die Fasern sind im Bauteil gegebenenfalls unter Zuhilfenahme von Rechenprogrammen völlig in Kraftflußrichtung orientiert, wobei diese Orientierung nicht durch Fertigungseinflüsse verloren geht. Harze im Sinne der DIN-Norm 16 945 sind Oligomere und/oder Polymere, die bei Verarbeitung unter Vernetzung reagieren, beispielsweise Epoxyd-, Polyester- oder Phenylester-Harze. Darüberhinaus kann die Matrix aus Phenol- und Polyimid-Harzen bestehen.

Das elastomere Material, das beim erfindungsgemäßen Träger für die Zwischenlagen verwendet werden kann, ist ein elastomeres Material insbesondere im Sinne der Werkstoffleistungsblätter aus der Luftfahrtnorm (LN).

Nachstehend ist die Erfindung anhand von in der Zeichnung dargestellten Ausführungsformen näher erläutert. In der Zeichnung zeigen jeweils schematisch:

Figur 1 eine Seitenansicht eines Trägers zur Motoraufhängung aus einem Hohlprofil mit Rechteckquerschnitt;

Figur 2 die Orientierung der Fasern der einzelnen Lagen des Hohlprofils gemäß Figur 1;

Figur 3 eine Seitenansicht eines L-förmigen Trägers aus Flachprofil;

Figur 4 eine Seitenansicht eines T-förmigen Trägers aus Flachprofil; und

Figur 5 die Orientierung der Fasern der einzelnen Lagen des Flachprofils gemäß Figuren 3 und 4.

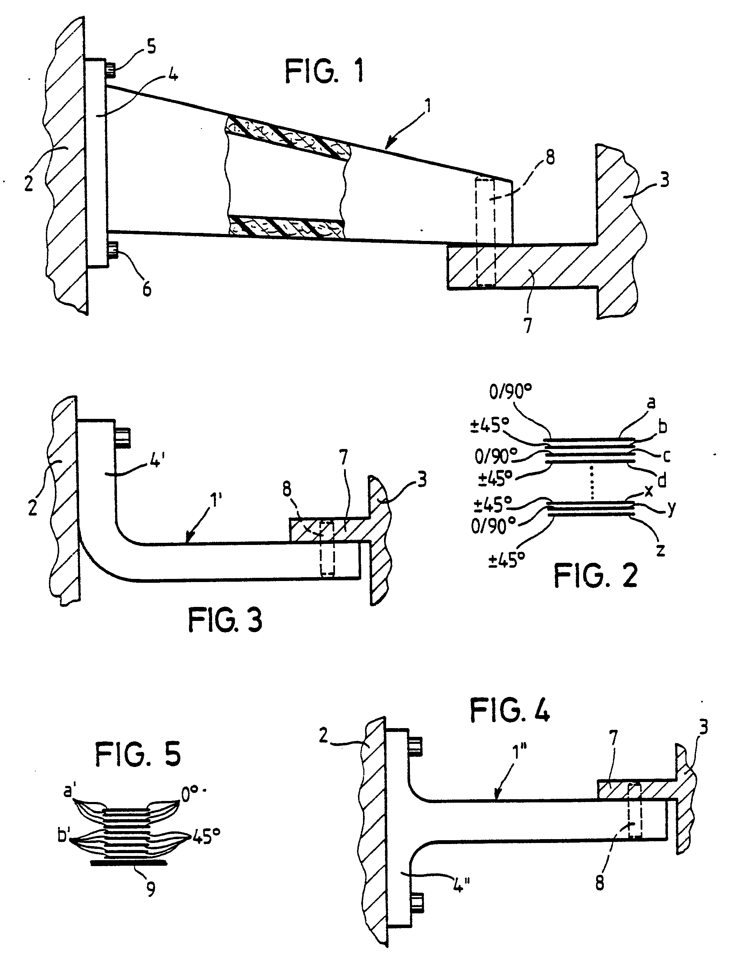

Gemäß Figur 1 ist ein Träger 1 zwischen dem Motor 2 und der Karosserie 3 eines Kraftfahrzeuges angeordnet.

Das dem Motor 2 benachbarte Ende des Trägers 1 ist mit einer Befestigungsplatte 4 versehen, die Öffnungen aufweist, über die mittels schematisch dargestellter Bolzen 5, 6 der Träger 1 am Motor 2 befestigt wird.

Das andere Ende des Trägers 1 stützt sich auf einen Flansch 7 der Karosserie 3 ab. Es weist eine Bohrung auf, durch die sich ein schematisch dargestellter Stift 8 erstreckt, mit dem der Träger 1 in einer Bohrung am Flansch 7 der Karosserie 3 in seiner Lage fixiert wird.

Der Träger 1 besteht aus einem Hohlprofil mit rechteckigem Querschnitt, ist einstückig ausgebildet und einschließlich der Befestigungsplatte 4 aus Faserverbundwerkstoff gefertigt. Die Wandstärke des Hohlprofils beträgt lediglich wenige Millimeter. Sie ist vor allem von der Belastung, der Länge des Trägers 1 und der Kraftfahrzeugart abhängig.

Der Faserverbundwerkstoff ist aus mehreren Lagen aufgebaut, wobei die einzelnen Lagen a, b, c, d .... x, y, z in bezug auf die sich vom Motor 2 zur Karosserie 3 erstreckende Längsachse des Trägers 1, die auch als 0°-Achse bezeichnet wird, eine unterschiedliche Faserorientierung aufweisen (Fig. 2).

So sind gemäß Figur 2 bei dem Träger 1 nach Figur 1 die Fasern in den einzelnen Lagen a, b, c, d ..... x, y, z in der Ebene jeder Lage rechtwinklig angeordnet, liegen also beispielsweise als Gewebe mit rechtwinkligen Maschen vor, wobei die einzelnen Lagen a, b, c, d .... x, y, z aus Lagen a, c, ..... y mit einer Orientierung der Faser zur Trägerlängsachse von 0° bzw. 90° (0/90°) und Lagen b, d, x, z mit einer Orientierung der Fasern zur Trägerlängsachse von + 45° und — 45° (± 45°) bestehen. Die Lagen a, c, y mit einer 0/90°-Faserorientierung und die Lagen b, d, x, z mit einer ± 45°-Faserorientierung wechseln dabei ab.

Beispielsweise erweist sich ein Träger 1 mit einer Wandstärke von 5 bis 7 mm, einer Länge von 160 mm und einem Außenquerschnitt des Hohlprofils von 18 × 18 mm am karosserieseitigen bzw. 90 × 46 mm am motorseitigen Ende bei einer Massenbelastung von 160 kg (pro Träger) bei Kräften in der x-Richtung (0-Achse) und in der y-Richtung von 1 g und in der z-Richtung von 3 g als dauerfest. Der Biegeschub wird dabei im wesentlichen von den Seitenwänden aufgenommen.

Ein rechteckiger Querschnitt des Hohlprofils wird gegenüber einem runden Querschnitt vor allem wegen der einfachen Fertigung vorgezogen.

Die Ausführungsformen nach Figur 3 bis 5 unterscheiden sich von der nach Figur 1 und 2 im wesentlichen dadurch, daß das Hohlprofil durch ein Flachprofil ersetzt ist und statt des Lagenaufbaus nach Figur 2 der Lagenaufbau nach Figur 5 erfolgt.

Bei der Ausführungsform nach Figur 3 ist der Träger 1' L-förmig ausgebildet, wobei der kurze Schenkel des L als Befestigungsplatte 4' dient. Bei der Ausführungsform nach Figur 4 weist der Träger 1" eine T-Form auf, wobei der Querbalken des T die Befestigungsplatte 4" bildet. Die Frage der Zweckmäßigkeit der L- oder T-Form des Trägers 1' bzw. 1" hängt beispielsweise von der Belastung des Trägers und der Anordnung des Motors gegenüber der Karosserie ab.

Gemäß Figur 5 sind bei der Ausführungsform nach Figur 3 und 4 die Fasern der einzelnen Lagen a', parallel zueinander angeordnet, wobei die einzelnen Lagen a', b' aus Lagen a' mit einer Orientierung der Faser zur Trägerlängsachse von 0° und Lagen b' mit einer Orientierung der Fasern zur Trägerlängsachse von + 45° und — 45° bestehen.

Dabei folgen mehreren Lagen a' mit einer Faserorientierung zur Trägerlängsachse von 0°, mehrere Lagen b' mit einer Faserorientierung zur Trägerlängsachse von ± 45°, worauf eine Zwischenschicht 9 aus elastomerem Material vorgesehen ist. Der Zwischenschicht 9 schließen sich dann, was in Figur 5 nicht mehr dargestellt ist, wieder mehrere Lagen mit einer Faserorientierung zur Trägerlängsachse von ± 45° und dann mehrere Lagen mit einer Faserorientierung zur Trägerlängsachse von 0° an. Die Anzahl der Lagen a' gegenüber der Lagen b' hängt wiederum von der Beanspruchung des Trägers ab.

**Patentansprüche**

1. Träger zur Aufhängung des Motors oder des Getriebes an der Karosserie eines Kraftfahrzeuges, dadurch gekennzeichnet, daß er einstückig ausgebildet ist und aus einem Faserverbundwerkstoff aus mehreren Faserverbundwerkstoff-Lagen (a, b, c, ... ; a', b' ...) besteht und die einzelnen Lagen (a, b, c ... ; a', b' ...) in bezug auf die vom Motor (2) bzw. Getriebe zur Karosserie (3) erstreckende Achse des Trägers (1 ; 1' ; 1") eine unterschiedliche Faserorientierung aufweisen.

2. Träger nach Anspruch 1, dadurch gekennzeichnet, daß er aus einem Hohlprofil besteht.

3. Träger nach Anspruch 2, dadurch gekennzeichnet, daß das Hohlprofil eine rechteckigen Querschnitt aufweist.

4. Träger nach Anspruch 2 oder 3, dadurch gekennzeichnet, daß die Fasern in den einzelnen Lagen (a, b, c ... x, y, z) rechtwinkling zueinander angeordnet sind und die einzelnen Lagen (a, b, c ... x, y, z) aus Lagen (a, c ... y) mit einer Orientierung der Fasern zur Trägerachse von Null und 90° und die Lagen (b, d ... x, z) mit einer Orientierung der Fasern zur Trägerachse von + 45° und — 45° bestehen.

5. Träger nach Anspruch 4, dadurch gekennzeichnet, daß abwechselnd eine Lage (a, c ... y) mit einer Null- bzw. 90°-Faserorientierung und eine Lage (b, d ... x, z) mit einer ± 45°-Faserorientierung vorgesehen ist.

6. Träger nach Anspruch 4 oder 5, dadurch gekennzeichnet, daß die Fasern der einzelnen Lagen (a, b, c ... x, y, z) als Gewebe vorliegen.

7. Träger nach Anspruch 1, dadurch gekennzeichnet, daß er aus einem Flachprofil besteht.

8. Träger nach Anspruch 7, dadurch gekennzeichnet, daß die Fasern einzelner Lagen (a', ...) parallel zueinander angeordnet sind und die einzelnen Lagen (a', b' ...) aus Lagen (a') mit einer Orientierung der Fasern zur Trägerachse von 0° und Lagen (b') mit einer Orientierung der Fasern zur Trägerachse von + 45° und — 45° bestehen.

9. Träger nach einem der vorstehenden Ansprüche, dadurch gekennzeichnet, daß zwischen einzelnen Faserverbundwerkstoff-Lagen (a', b' ...) eine Zwischenschicht (9) aus einem elastomeren Material vorgesehen ist.

10. Träger nach einem der vorstehenden Ansprüche, dadurch gekennzeichnet, daß die Fasern des Faserverbundwerkstoffs aus Glas-, Aramidoder Kohlefasern bestehen.

## Claims

1. A support for the suspension of the engine or of the gearing from the bodywork of a motor vehicle, characterised in that it is one-piece in design and consists of a fibre composite material comprising several layers (a, b, c, ... ; a', b' ...) of fibre composite material, the individual layers (a, b, c ... ; a', b' ...) of which have different fibre orientations with respect to the axis of the support (1 ; 1' ; 1") extending from the engine (2) or the gearing to the bodywork (3).

2. A support according to claim 1, characterised in that it consists of a hollow profile.

3. A support according to claim 2, characterised in that the hollow profile has a rectangular cross-section.

4. A support according to claim 2 or 3, characterised in that the fibres in the individual layers (a, b, c ... x, y, z) are arranged at right angles to one another and the individual layers (a, b, c ... x, y, z) consist of layers (a, c ... y) having a fibre orientation of zero and 90° with regard to the support axis and layers (b, d ... x, z) having a fibre orientation of + 45° and — 45° with regard to the support axis.

5. A support according to claim 4, characterised in that alternately a layer (a, c ... y) with a zero or 90° fibre orientation and a layer (b, d ... x, z) with a ± 45° fibre orientation is provided.

6. A support according to claim 4 or 5, characterised in that the fibres of the individual layers (a, b, c ... x, y, z) are present as a woven fabric.

7. A support according to claim 1, characterised in that it consists of a flat profile.

8. A support according to claim 7, characterised in that the fibres of individual layers (a', ...) are arranged parallel to one another and the individual layers (a', b' ...) consist of layers (a') with a fibre orientation of 0° with regard to the support axis and layers (b') with a fibre orientation of + 45° and — 45° with regard to the support axis.

9. A support according to any of the preceding claims, characterised in that an intermediate layer (9) consisting of an elastomeric material is provided between individual layers (a', b' ...) of the fibre composite material.

10. A support according to any of the preceding claims, characterised in that the fibres of the fibre composite material consist of glass-, aramide- or carbon fibres.

## Revendications

1. Support pour suspendre le moteur ou la transmission d'un véhicule automobile à la carrosserie de celui-ci, caractérisé en ce qu'il est conçu et réalisé en une seule pièce et consiste en un matériau composite renforcé par fibres, comportant plusieurs couches d'un tel matériau (a, b, c ... ; a', b', ...), et que les différentes couches (a, b, c ... ; a', b', ...) présentent des orientations de fibres différentes par rapport à l'axe du support (1 ; 1' ; 1") s'étendant depuis le moteur (2) ou la transmission jusqu'à la carrosserie (3).

2. Support selon la revendication 1, caractérisé en ce qu'il est constitué par un profilé creux.

3. Support selon la revendication 2, caractérisé en ce que le profilé creux présente une section droite rectangulaire.

4. Support selon la revendication 2 ou 3, caractérisé en ce que les fibres dans les couches individuelles (a, b, c ... x, y, z) sont agencées à angle droit les unes par rapport aux autres, et en ce que les couches individuelles (a, b, c ... x, y, z) sont constituées par des couches (a, c, ... y) avec une orientation de fibres de 0° et 90° par rapport à l'axe du support et par des couches (b, d ... x, z) avec une orientation de fibres de + 45° et — 45° par rapport à l'axe du support.

5. Support selon la revendication 4, caractérisé en ce qu'il est prévu, en alternance, une couche (a, c ... y) avec fibres orientées à 0° et 90° et une couche (b, d ... x, z) avec fibres orientées à ± 45°.

6. Support selon la revendication 4 ou 5, caractérisé en ce que les fibres des couches individuelles (a, b, c ... x, y, z) sont présentes sous forme de tissu.

7. Support selon la revendication 1, caractérisé en ce qu'il est constitué par un profilé plat.

8. Support selon la revendication 7, caractérisé en ce que les fibres de couches individuelles (a', .....) sont disposées parallèlement les unes aux autres, et en ce que ces couches individuelles (a', b' ....) sont constituées de couches (a') ayant des fibres orientées à 0° par rapport à l'axe du support et par des couches (b') ayant des fibres orientées à + 45° et à — 45° par rapport à l'axe du support.

9. Support selon l'une des revendications précédentes, caractérisé en ce qu'une couche intermédiaire (9) d'une matière élastomère est prévue entre les couches individuelles (a', b' ...) du matériau composite renforcé par fibres.

10. Support selon l'une des revendications précédentes, caractérisé en ce que les fibres du matériau composite renforcé sont des fibres de verre, aramide ou carbone.

FIG. 1

FIG. 3

FIG. 2

FIG. 5

FIG. 4